# EUROPEAN PATENT APPLICATION

(11) **EP 4 549 512 A1**
(43) Date of publication of application: **07.05.2025**
(21) Application number: 23830764.9
(22) Date of filing: 04.04.2023
(51) Int. Cl.: C08L 33/06, C08K 3/36, C08L 33/14, C08L 83/08, C09K 3/10, F16J 15/10, F16J 15/3284, F16L 11/04

(54) **RUBBER COMPOSITION AND CURED PRODUCT THEREOF**

(30) Priority: 30.06.2022 JP 2022105918
(71) Applicant: Denka Company Limited, Tokyo 103-8338 (JP)
(72) Inventor: NAKANO, Tatsuya, Tokyo 103-8338 (JP); MIYAUCHI, Toshiaki, Tokyo 103-8338 (JP)
(74) Representative: Hoffmann Eitle
(86) International application number: PCT/JP2023/013881
(87) International publication number: WO 2024/004310

(57) **Abstract**

Provided is a rubber composition which can form a cured product having high strength. The rubber composition includes: an acrylic rubber which is a copolymer of monomers containing an alkyl (meth)acrylate; silica; and a polyorganosiloxane having two or more amino groups per molecule.

## Description

### TECHNICAL FIELD

The present invention relates to a rubber composition and a cured product thereof.

### BACKGROUND ART

A cured product of a rubber composition containing an acrylic rubber is excellent in physical properties such as heat resistance, oil resistance, mechanical properties, and compression set properties, and is widely used as a material such as a hose member, a seal member, or a gasket member in an engine room of automobiles. In recent years, these automotive members have been required to be more reliable due to the influence of emission control measures, increased engine power, and the like. In particular, these members are required to be excellent in strength, elongation and compression set properties.

For example, PTL 1 discloses a rubber composition containing a white filler and which can be processed to form a cured product having good mechanical properties.

### CITATION LIST

### PATENT LITERATURE

PTL 1: Japanese Patent No. 6967459

### SUMMARY OF INVENTION

### TECHNICAL PROBLEM

An object of the present invention is to provide a rubber composition which can form a cured product having high strength.

### SOLUTION TO PROBLEM

The present invention includes the following embodiments.
[1] A rubber composition including:
   an acrylic rubber which is a copolymer of monomers containing an alkyl (meth)acrylate;
   silica; and
   a polyorganosiloxane having two or more amino groups per molecule.
[2] The rubber composition according to [1], wherein the acrylic rubber is a carboxyl group-containing acrylic rubber, which is a copolymer of monomers containing an alkyl (meth)acrylate and a carboxyl group-containing monomer.
[3] The rubber composition according to [1] or [2], wherein the acrylic rubber is a carboxyl group-containing acrylic rubber, which is a copolymer of monomers containing an alkyl (meth)acrylate, a carboxyl group-containing monomer, and an olefin.
[4] The rubber composition according to [1], wherein the acrylic rubber is an epoxy group-containing acrylic rubber, which is a copolymer of monomers containing an alkyl (meth)acrylate and an epoxy group-containing monomer.
[5] The rubber composition according to [4], wherein the acrylic rubber is an epoxy group-containing acrylic rubber, which is a copolymer of monomers containing an alkyl (meth)acrylate, an epoxy group-containing monomer, an olefin, and a vinyl carboxylate.
[6] The rubber composition according to [3] or [5], wherein the olefin is at least one selected from the group consisting of ethylene, butadiene, and isoprene.
[7] The rubber composition according to any of [1] to [6], wherein a BET specific surface area of the silica is 100 to 130 m²/g.
[8] The rubber composition according to any of [1] to [7], wherein an alkyl moiety of the alkyl (meth)acrylate has 1 to 4 carbon atoms.
[9] The rubber composition according to any of [1] to [8], wherein the polyorganosiloxane has structural unit (I) as follows:

   [R¹ₓRₐSiO_{(4-(x+a))/2}] (I)

   wherein x is 1, 2, or 3; a is 0, 1, or 2; x+a<4; R is each independently methyl, ethyl, propyl, phenyl, or hydroxy; and R¹ is each independently a monovalent organic residue having an NH₂ group.
[10] The rubber composition according to any of [1] to [9], wherein a mass proportion of the silica to the acrylic rubber (silica/acrylic rubber) is 0.2 to 1.0.
[11] The rubber composition according to any of [1] to [10], wherein a mass proportion of the polyorganosiloxane to the acrylic rubber (polyorganosiloxane/acrylic rubber) is 0.005 to 0.08.
[12] The rubber composition according to any of [1] to [11], wherein a mass proportion of the polyorganosiloxane to the silica (polyorganosiloxane/silica) is 0.01 to 0.3.
[13] A cured product obtained by curing the rubber composition according to any of [1] to [12].
[14] A hose, seal, or gasket including the cured product according to [13].

### ADVANTAGEOUS EFFECTS OF INVENTION

According to the present invention, it is possible to provide a rubber composition which can form a cured product having high strength.

### DESCRIPTION OF EMBODIMENTS

A rubber composition according to the present embodiments includes an acrylic rubber which is a copolymer of monomers containing an alkyl (meth)acrylate, silica, and a polyorganosiloxane having two or more amino groups per molecule.

The polyorganosiloxane having two or more amino groups per molecule included in the rubber composition according to the present embodiments is highly compatible with the acrylic rubber, which is the copolymer of monomers containing an alkyl (meth)acrylate, and it is assumed that dispersibility of the silica in the rubber composition is improved. When the rubber composition is cured, the amino groups of the polyorganosiloxane bond with the acrylic rubber and the siloxane framework is located near the silica, but it is considered that the resulting cured product has improved strength because the silica is highly dispersible. This also allows the cured product to have high elongation. Furthermore, the cured product can also have high compression set properties, which are equivalent to those of conventional rubber compositions using carbon black and rubber compositions using silane coupling agents having amino groups or epoxy groups.

### (Acrylic Rubber)

The rubber composition according to the present embodiments includes an acrylic rubber, which is a copolymer of monomers containing an alkyl (meth)acrylate. The term "alkyl (meth)acrylate" represents an alkyl acrylate and an alkyl methacrylate. Examples of the alkyl (meth)acrylate include methyl (meth)acrylate, ethyl (meth)acrylate, n-propyl (meth)acrylate, n-butyl (meth)acrylate, isobutyl (meth)acrylate, n-pentyl (meth)acrylate, isoamyl (meth)acrylate, n-hexyl (meth)acrylate, 2-methylpentyl (meth)acrylate, n-octyl (meth)acrylate, 2-ethylhexyl (meth)acrylate, n-decyl (meth)acrylate, n-dodecyl (meth)acrylate, and n-octadecyl (meth)acrylate. These may be used singly or in combination of two or more.

Among these, as the alkyl (meth)acrylate, an alkyl (meth)acrylate having an alkyl moiety of 1 to 4 carbon atoms is preferable from the viewpoint of the balance of strength/oil resistance/cold resistance. Specifically, methyl (meta)acrylate, ethyl (meta)acrylate, n-propyl (meth)acrylate, n-butyl (meth)acrylate, and isobutyl (meth)acrylate are preferable.

The monomers constituting the copolymer preferably contain 60 to 99% by mass of the alkyl (meth)acrylate, more preferably 70 to 99% by mass, and even more preferably 80 to 98% by mass.

In addition to the alkyl (meth)acrylate, the monomers preferably further contain a carboxyl group-containing monomer or an epoxy group-containing monomer. That is, the acrylic rubber according to the present embodiments is preferably a carboxyl group-containing acrylic rubber, which is the copolymer of monomers containing the alkyl (meth)acrylate and the carboxyl group-containing monomer, or an epoxy group-containing acrylic rubber, which is the copolymer of monomers containing the alkyl (meth)acrylate and the epoxy group-containing monomer. The carboxyl group-containing monomer and the epoxy group-containing monomer act as cross-linked seat monomers (monomers having functional groups that form cross-linking points).

Examples of the carboxyl group-containing monomer include acrylic acid, methacrylic acid, crotonic acid, 2-pentenoic acid, maleic acid, fumaric acid, itaconic acid, a maleic monoalkyl ester, a fumaric monoalkyl ester, mono-cyclohexyl maleate, mono-cyclohexyl fumarate, and cinnamic acid. Examples of the epoxy group-containing monomer include glycidyl acrylate, glycidyl methacrylate, an allyl glycidyl ether, and a methallyl glycidyl ether. These can be used singly or in combination of two or more.

When the monomers constituting the copolymer contain the carboxyl group-containing monomer or the epoxy group-containing monomer, the monomers preferably contain 0.1 to 5% by mass of the carboxyl group-containing monomer or the epoxy group-containing monomer, more preferably 0.5 to 3% by mass, and even more preferably 1 to 2% by mass, from the viewpoint of the balance of strength/elongation.

The monomers preferably further contain an olefin in addition to the alkyl (meth)acrylate, and the carboxyl group-containing monomer or the epoxy group-containing monomer. That is, the acrylic rubber according to the present embodiments is preferably the carboxyl group-containing acrylic rubber which is the copolymer of monomers containing the alkyl (meth)acrylate, the carboxyl group-containing monomer, and the olefin, or the epoxy group-containing acrylic rubber which is the copolymer of monomers containing the alkyl (meth)acrylate, the epoxy group-containing monomer, and the olefin. The olefin may improve mechanical properties and cold resistance of the cured product.

Examples of the olefin include ethylene, butadiene, and isoprene. These can be used singly or in combination of two or more. Among these, as the olefin, preferable is ethylene, which does not contain double bonds that cause deterioration in heat resistance after reaction.

When the monomers constituting the copolymer contain the olefin, the monomers preferably contain 0.1 to 5% by mass of the olefin, more preferably 0.3 to 4% by mass, and even more preferably 0.5 to 2% by mass, from the viewpoint of the mechanical properties and the like of the cured product. Examples of the carboxyl group-containing acrylic rubber which is the copolymer of monomers containing the alkyl (meth)acrylate, the carboxyl group-containing monomer, and the olefin, include DENKA ER A322 (product name, produced by Denka Company Limited), and DENKA ER A413 (product name, produced by Denka Company Limited) as commercially available products.

When the monomers contain the alkyl (meth)acrylate, the epoxy group-containing monomer, and the olefin, the monomers preferably further contain a vinyl carboxylate. That is, the acrylic rubber according to the present embodiments is preferably the epoxy group-containing acrylic rubber which is the copolymer of monomers containing the alkyl (meth)acrylate, the epoxy group-containing monomer, the olefin, and the vinyl carboxylate. The vinyl carboxylate may improve the mechanical properties of the cured product.

Examples of the vinyl carboxylate include vinyl acetate, vinyl propionate, vinyl 2-ethylhexanoate, vinyl laurate, and vinyl neodecanoate. These can be used singly or in combination of two or more. Among these, as the vinyl carboxylate, the vinyl acetate is preferable from the viewpoint of the strength.

When the monomers constituting the copolymer contain the vinyl carboxylate, the monomers preferably contain 1 to 20% by mass of the vinyl carboxylate, more preferably 3 to 17% by mass, and even more preferably 5 to 15% by mass, from the viewpoint of the mechanical properties of the cured product. Examples of the epoxy group-containing acrylic rubber which is the copolymer of monomers containing the alkyl (meth)acrylate, the epoxy group-containing monomer, the olefin, and the vinyl carboxylate include DENKA ER 5300 (product name, produced by Denka Company Limited) as a commercially available product.

The acrylic rubber is obtained by copolymerizing the monomers by using known methods such as emulsion polymerization, suspension polymerization, solution polymerization, and bulk polymerization.

### (Silica)

The rubber composition according to the present embodiments includes silica as a filler. By using the silica as a filler, the dispersibility of the filler in the rubber composition according to the present embodiments is improved, and the resulting cured product has high strength and elongation. The silica is not limited, but examples include wet silica, dry silica, and silica fume.

A BET specific surface area of the silica is preferably 100 to 130 m²/g. Since the BET specific surface area of the silica is in the range of 100 to 130 m²/g, the agglomeration of silica is prevented, and reinforcement due to the silica is fully expressed. Therefore, the cured product obtained can have high strength. Here, the BET specific surface area is a value measured by a BET method.

In the rubber composition according to the present embodiments, a mass proportion of the silica to the acrylic rubber (silica/acrylic rubber) is preferably 0.2 to 1.0, more preferably 0.3 to 0.8, and even more preferably 0.4 to 0.6, from the viewpoint of improving the strength and elongation of the cured product.

### (Polyorganosiloxane)

The rubber composition according to the present embodiments includes a polyorganosiloxane having two or more amino groups per molecule. In a rubber composition including an acrylic rubber, conventionally, when silica has been used as a filler, a silane coupling agent having an amino group or an epoxy group has been used in combination. In the rubber composition according to the present embodiments, the polyorganosiloxane having two or more amino groups per molecule is used instead of the silane coupling agent to enable the cured product to have excellent strength. Since the polyorganosiloxane has high compatibility with the acrylic rubber which is the copolymer of monomers containing the alkyl (meth)acrylate, the dispersibility of the silica is improved and, as a result, the strength of the cured product is assumed to be improved. Also, the cured product has good elongation and compression set properties.

The polyorganosiloxane having two or more amino groups per molecule preferably has structural unit (I) as follows, from the viewpoint of improving the strength of the cured product.

[R¹ₓRₐSiO_{(4-(x+a))/2}] (I)

wherein x is 1, 2, or 3; a is 0, 1, or 2; x+a<4; R is each independently methyl, ethyl, propyl, phenyl, or hydroxy; and R¹ is each independently a monovalent organic residue having an NH₂ group.

In formula (I), x is preferably 1. Also, a is preferably 1 or 2, and more preferably 1. R is preferably methyl or hydroxy, and more preferably methyl. Examples of R¹ include -R²-NH₂, -R²-N(R³)-NH₂, and -R²-N(R³)-R⁴-NH₂. Here, R² and R⁴ are each independently alkylene or alkyleneoxy groups having 1 to 20 carbon atoms. It is preferably the alkylene group having 1 to 5 carbon atoms. R³ is a hydrogen or an alkyl group having 1 to 5 carbon atoms.

R¹ is preferably -R²-NH₂. Here R² is an alkylene group having 1 to 5 carbon atoms, preferably an alkylene group having 2 to 4 carbon atoms, and particularly preferably an aminopropyl group.

At least two amino groups per molecule of the polyorganosiloxane are preferably located on different R¹ groups, and more preferably located on different structural units (I), and even more preferably located on different structural units I^{D} described later.

Preferable structural unit (I) with x=1 is structural unit I^{D} with a=1,

[R¹RSiO_{2/2}] (I^{D})

, or structural unit I^{M} with a=2,

[R¹R₂SiO_{1/2}] (I^{M})

.

In addition to structural unit (I), the polyorganosiloxane according to the present embodiments can further have structural unit (II^{D}) as follows:

[R'₂SiO_{2/2}] (II^{D})

wherein R' are identical or different groups (preferably identical groups), and linear, branched, or cyclic organic residues that can be bonded via an oxygen atom. R' are preferably methyl, ethyl, propyl, or phenyl groups, and particularly preferably methyl groups.

In addition to structural unit (I), the polyorganosiloxane according to the present embodiments can further have structural unit (III^{M}) as follows:

[R"₃SiO_{1/2}] (III^{M})

wherein R" are identical or different groups, and are hydroxy, linear, branched, or cyclic organic residues that can be bonded via an oxygen atom. R" are preferably hydroxy, methyl, ethyl, propyl, or phenyl groups, and particularly preferably the hydroxy or methyl groups.

For example, R" can be identical groups, and be methyl groups. Structural unit (III^{M}) can also be [(CH₃)₂(HO)SiO_{1/2}].

For example, preferable structures of the polyorganosiloxane according to the present embodiments are as follows.

[I^{D}]ₘ[I^{M}]ₙ[II^{D}]ₒ[III^{M}]₍₂₋ₙ₎

wherein m is in a range of 0 to 40, and n can be 0, 1, or 2. However, m+n is at least 2, and m+n is preferably in a range up to 20. o is in a range of 0 to 1,000. m+o+2 is at least 3.

Examples of the polyorganosiloxane having structural unit (I) include STRUKTOL HT750, HT740, and HT760 (product names, produced by Struktol GmbH), KF-864, KF-865, KF-868, and KF-8015 (product names, produced by Shinetsu Silicone Ltd.), DOWSIL BY 16-213 FLUID (product names, produced by Dow Chemical Company), and AMS-132, AMS-152, AMS-162, AMS-163, AMS-191, and AMS-1203 (product names, produced by Gelest Inc.), which have a structure of formula (A) as follows, as commercially available products.

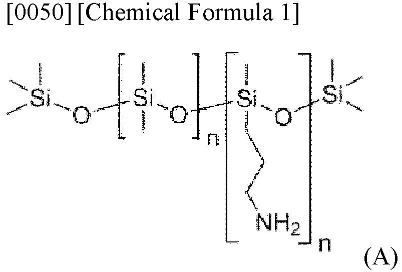

A mass proportion of the polyorganosiloxane to the acrylic rubber (polyorganosiloxane/acrylic rubber) is preferably 0.005 to 0.08, more preferably 0.007 to 0.07, and even more preferably 0.01 to 0.06, from the viewpoint of improving the strength and elongation of the cured product. In addition, a mass proportion of the polyorganosiloxane to the silica (polyorganosiloxane/silica) is preferably 0.01 to 0.3, more preferably 0.02 to 0.2, and even more preferably 0.02 to 0.1, from the viewpoint of improving the strength and elongation of the cured product.

### (Other Components)

The rubber composition according to the present embodiments may arbitrarily include other components than the acrylic rubber, the silica, and the polyorganosiloxane described above. Examples of other components include an antioxidant, a lubricant, a vulcanizing agent, a vulcanization accelerator, a vulcanization retardant, a plasticizer, and a filler.

### (Cured Product)

The cured product according to the present embodiments is obtained by curing the rubber composition according to the present embodiments. The cured product is particularly excellent in strength since it is the cured product of the rubber composition according to the present embodiments. Therefore, the cured product can be suitably used for hoses, seals, gaskets, etc.

### EXAMPLES

Hereinafter, the embodiments of the present invention will be specifically described with reference to Examples, but the present invention is not limited by these Examples. Tensile strength, elongation, and compression set of the cured product were measured by the following methods.

### [Tensile Strength]

The tensile strength of the cured product was measured in accordance with JIS K6251.

### [Elongation]

The elongation of the cured product was measured in accordance with JIS K6251.

### [Compression Set]

The compression set of the cured product was measured at 175°C for 72 hours in accordance with JIS K6262.

### [Example 1]

The following components were mixed to prepare a rubber composition.
· Acrylic rubber: DENKA ER A322 (product name, produced by Denka Company Limited): 100 parts by mass.
· Silica: Nipsil ER (product name, produced by Tosoh Silica Corporation, BET specific surface area: 100 m²/g): 50 parts by mass.
· Polyorganosiloxane: STRUKTOL HT750 (product name, produced by Struktol GmbH): 2 parts by mass.
· Antioxidant: DCD (NAUGUARD #445 produced by SI Group, Inc.): 1 part by mass.
· Lubricant: Stearic acid: 1 part by mass.
· Lubricant: Stearyl amine: 0.3 parts by mass.
· Vulcanizing agent: Hexamethylenediamine carbamate: 0.6 parts by mass.
· Vulcanization accelerator: Rhenogran XLA-60 (product name, produced by LANXESS GmbH): 1.2 parts by mass.

Here, DENKA ER A322 contains 82 parts by mass of ethyl acrylate, 17 parts by mass of butyl acrylate, 1 part by mass of ethylene, and 2 parts by mass of a carboxyl group-containing monomer, as a polymer composition.

The rubber composition was kneaded using a pressure kneader and an open roll mixer, and then a cross-linking reaction was carried out at 170°C for 20 minutes in a press, and then at 170°C for 4 hours in a gear oven. This produced a cured product of the rubber composition. The tensile strength, elongation and compression set of the cured product were measured using the method described above. The results are shown in Table 1. In Table 1, the unit for an amount of each component blended is parts by mass, and the blending proportion of each component is given as a mass proportion. The same applies to Tables 2 to 6.

### [Comparative Example 1]

Except that 75 parts by mass of carbon black (SRF) (product name: Seast S, produced by TOKAI CARBON CO., LTD.) was used instead of 50 parts by mass of the silica as the filler, a rubber composition was prepared in the same manner as in Example 1, to obtain a cured product and evaluated. The results are shown in Table 1.

### [Comparative Example 2]

Except that 1.1 parts by mass of an amino group-containing silane coupling agent (aminopropyltrimethoxysilane) was used instead of 2 parts by mass of the polyorganosiloxane, a rubber composition was prepared in the same manner as in Example 1, to obtain a cured product and evaluated. The results are shown in Table 1.

### [Comparative Example 3]

Except that 1.5 parts by mass of an epoxy group-containing silane coupling agent (glycidyloxypropyltrimethoxysilane) was used instead of 2 parts by mass of the polyorganosiloxane, a rubber composition was prepared in the same manner as in Example 1, to obtain a cured product and evaluated. The results are shown in Table 1.

**[Table 1]**

| | | Example 1 | Comparative Example 1 | Comparative Example 2 | Comparative Example 3 |
|---|---|---|---|---|---|
| Acrylic rubber | DENKA ER A322 | 100 | 100 | 100 | 100 |
| Silica | Nipsil ER (BET:100 m²/g) | 50 | - | 50 | 50 |
| Carbon black | SRF | - | 75 | - | - |
| Polyorganosiloxane | STRUKTOL HT750 | 2 | - | - | - |
| Silane coupling agent | Amino group-containing | - | - | 1.1 | - |
| | Epoxy group-containing | - | - | - | 1.5 |
| Silica/Acrylic rubber | | 0.5 | 0 | 0.5 | 0.5 |
| Polyorganosiloxane/Acrylic rubber | | 0.02 | 0 | 0 | 0 |
| Polyorganosiloxane/Silica | | 0.04 | - | 0 | 0 |
| Tensile strength [MPa] | | 15.2 | 11.2 | 11.6 | 12.7 |
| Elongation [%] | | 275 | 162 | 131 | 226 |
| Compression set [%] | | 24 | 19 | 21 | 29 |

As shown in Table 1, in Example 1 using the rubber composition according to the present embodiments, the tensile strength was high compared with conventional Comparative Example 1 using the carbon black as the filler and Comparative Examples 2 and 3 using the amino or epoxy group-containing silane coupling agent. In addition, the elongation was also high, and the compression set was similar.

### [Example 2]

Except that the blended amount of the polyorganosiloxane was changed to 1 part by mass, a rubber composition was prepared in the same manner as in Example 1, to obtain a cured product and evaluated. The results are shown in Table 2.

### [Example 3]

Except that the blended amount of the polyorganosiloxane was changed to 3 parts by mass, a rubber composition was prepared in the same manner as in Example 1, to obtain a cured product and evaluated. The results are shown in Table 2.

### [Example 4]

Except that the blended amount of the polyorganosiloxane was changed to 4 parts by mass, a rubber composition was prepared in the same manner as in Example 1, to obtain a cured product and evaluated. The results are shown in Table 2.

**[Table 2]**

| | | Example 2 | Example 1 | Example 3 | Example 4 |
|---|---|---|---|---|---|
| Acrylic rubber | DENKA ER A322 | 100 | 100 | 100 | 100 |
| Silica | Nipsil ER (BET:100 m²/g) | 50 | 50 | 50 | 50 |
| Polyorganosiloxane | STRUKTOL HT750 | 1 | 2 | 3 | 4 |
| Silica/Acrylic rubber | | 0.5 | 0.5 | 0.5 | 0.5 |
| Polyorganosiloxane/Acrylic rubber | | 0.01 | 0.02 | 0.03 | 0.04 |
| Polyorganosiloxane/Silica | | 0.02 | 0.04 | 0.06 | 0.08 |
| Tensile strength [MPa] | | 14.4 | 15.2 | 15.0 | 14.7 |
| Elongation [%] | | 325 | 275 | 209 | 213 |
| Compression set [%] | | 30 | 24 | 20 | 19 |

As shown in Table 2, the cured products according to the present embodiments showed high tensile strength even when the blended amount of polyorganosiloxane was changed. In addition, the elongation and compression set also showed sufficient values for practical use.

### [Example 5]

Except that the blended amounts of the silica, the polyorganosiloxane, the vulcanizing agent, and the vulcanization accelerator were respectively changed to 40 parts by mass, 2.4 parts by mass, 0.4 parts by mass, and 0.8 parts by mass, a rubber composition was prepared in the same manner as in Example 1, to obtain a cured product and evaluated. The results are shown in Table 3.

### [Example 6]

Except that the blended amounts of the silica and the polyorganosiloxane were respectively changed to 50 parts by mass, and 3 parts by mass, a rubber composition was prepared in the same manner as in Example 5, to obtain a cured product and evaluated. The results are shown in Table 3.

### [Example 7]

Except that the blended amounts of the silica and the polyorganosiloxane were respectively changed to 60 parts by mass, and 3.6 parts by mass, a rubber composition was prepared in the same manner as in Example 5, to obtain a cured product and evaluated. The results are shown in Table 3.

**[Table 3]**

| | | Example 5 | Example 6 | Example 7 |
|---|---|---|---|---|
| Acrylic rubber | DENKA ER A322 | 100 | 100 | 100 |
| Silica | Nipsil ER (BET:100 m²/g) | 40 | 50 | 60 |
| Polyorganosiloxane | STRUKTOL HT750 | 2.4 | 3 | 3.6 |
| Silica/Acrylic rubber | | 0.4 | 0.5 | 0.6 |
| Polyorganosiloxane/Acrylic rubber | | 0.024 | 0.03 | 0.036 |
| Polyorganosiloxane/Silica | | 0.06 | 0.06 | 0.06 |
| Tensile strength [MPa] | | 13.1 | 14.5 | 15.4 |
| Elongation [%] | | 267 | 241 | 213 |
| Compression set [%] | | 20 | 24 | 29 |

As shown in Table 3, the cured products according to the present embodiments showed high tensile strength even when the blended amount of the silica was changed. In addition, the elongation and compression set also showed sufficient values for practical use.

### [Example 8]

Except that Nipsil ER (product name, produced by Tosoh Silica Corporation, BET specific surface area: 130 m²/g) was used as the silica instead of Nipsil ER (product name, produced by Tosoh Silica Corporation, BET specific surface area: 100 m²/g), and the blended amount of the polyorganosiloxane was changed to 4 parts by mass, a rubber composition was prepared in the same manner as in Example 3, to obtain a cured product and evaluated. The results are shown in Table 4.

**[Table 4]**

| | | Example 3 | Example 8 |
|---|---|---|---|
| Acrylic rubber | DENKA ER A322 | 100 | 100 |
| Silica | Nipsil ER (BET:100 m²/g) | 50 | - |
| | Nipsil ER (BET:130 m²/g) | - | 50 |
| Polyorganosiloxane | STRUKTOL HT750 | 3 | 4 |
| Silica/Acrylic rubber | | 0.5 | 0.5 |
| Polyorganosiloxane/Acrylic rubber | | 0.03 | 0.04 |
| Polyorganosiloxane/Silica | | 0.06 | 0.08 |
| Tensile strength [MPa] | | 15.0 | 15.9 |
| Elongation [%] | | 209 | 267 |
| Compression set [%] | | 20 | 23 |

As shown in Table 4, the cured products according to the present embodiments showed high tensile strength even when the specific surface area of the silica was changed. In addition, the elongation and compression set also showed sufficient values for practical use.

### [Example 9]

The following components were mixed to prepare a rubber composition.
· Acrylic rubber: DENKA ER 5300 (product name, produced by Denka Company Limited): 100 parts by mass.
· Silica: Nipsil ER (product name, produced by Tosoh Silica Corporation, BET specific surface area: 100 m²/g): 50 parts by mass.
· Polyorganosiloxane: STRUKTOL HT750 (product name, produced by Struktol GmbH): 3 parts by mass.
· Antioxidant: DCD (NAUGUARD #445 produced by SI Group, Inc.): 1 part by mass.
· Lubricant: Stearic acid: 1 part by mass.
· Vulcanizing agent: CN-25 (product name, produced by SHIKOKU CHEMICALS CORPORATION, 1-Cyanoethyl-2-methylimidazole, masterbatch): 1.4 parts by mass.
· Vulcanization accelerator: Ammonium benzoate: 0.3 parts by mass.
· Vulcanization accelerator: Sodium lauryl sulfate: 1 part by mass.

Here, DENKA ER 5300 contains 44 parts by mass of ethyl acrylate, 36 parts by mass of butyl acrylate, 14 parts by mass of vinyl acetate, 4 parts by mass of ethylene, and 1.6 parts by mass of an epoxy group-containing monomer, as a polymer composition.

Except that the above rubber composition was used, a rubber composition was prepared in the same manner as in Example 1, to obtain a cured product and evaluated. The results are shown in Table 5.

### [Comparative Example 4]

Except that the silica and the polyorganosiloxane were not blended, and 75 parts by mass of carbon black (SRF) (product name: Seast S, produced by TOKAI CARBON CO., LTD.) was blended instead, a rubber composition was prepared in the same manner as in Example 9, to obtain a cured product and evaluated. The results are shown in Table 5.

### [Example 10]

The following components were mixed to prepare a rubber composition.
· Acrylic rubber: Acrylic rubber A: 100 parts by mass.
· Silica: Nipsil ER (product name, produced by Tosoh Silica Corporation, BET specific surface area: 100 m²/g): 50 parts by mass.
· Polyorganosiloxane: STRUKTOL HT750 (product name, produced by Struktol GmbH): 3 parts by mass.
· Antioxidant: DCD (NAUGUARD #445 produced by SI Group, Inc.): 1 part by mass.
· Lubricant: Stearic acid: 1 part by mass.
· Lubricant: Stearyl amine: 0.3 parts by mass.
· Vulcanizing agent: Hexamethylenediamine carbamate: 0.4 parts by mass.
· Vulcanization accelerator: Rhenogran XLA-60 (product name, produced by LANXESS GmbH): 0.8 parts by mass.

Here, the acrylic rubber A contains 46 parts by mass of ethyl acrylate, 25 parts by mass of butyl acrylate, 28 parts by mass of butyl methacrylate, 1 part by mass of ethylene, and 1.5 parts by mass of a carboxyl group-containing monomer, as a polymer composition.

Except that the above rubber composition was used, a rubber composition was prepared in the same manner as in Example 1, to obtain a cured product and evaluated. The results are shown in Table 5.

### [Comparative Example 5]

Except that the silica and the polyorganosiloxane were not blended, and 75 parts by mass of carbon black (SRF) (product name: Seast S, produced by TOKAI CARBON CO., LTD.) was blended instead, a rubber composition was prepared in the same manner as in Example 10, to obtain a cured product and evaluated. The results are shown in Table 5.

**[Table 5]**

| | | Example 9 | Comparative Example 4 | Example 10 | Comparative Example 5 |
|---|---|---|---|---|---|
| Acrylic rubber | DENKA ER 5300 | 100 | 100 | - | - |
| | Acrylic rubber A | - | - | 100 | 100 |
| Silica | Nipsil ER (BET:100 m²/g) | 50 | - | 50 | - |
| Carbon black | SRF | - | 75 | - | 75 |
| Polyorganosiloxane | STRUKTOL HT750 | 3 | - | 3 | - |
| Silica/Acrylic rubber | | 0.5 | 0 | 0.5 | 0 |
| Polyorganosiloxane/Acrylic rubber | | 0.03 | 0 | 0.03 | 0 |
| Polyorganosiloxane/Silica | | 0.06 | - | 0.06 | - |
| Tensile strength [MPa] | | 14.6 | 11.4 | 13.6 | 11.3 |
| Elongation [%] | | 315 | 186 | 244 | 167 |
| Compression set [%] | | 60 | 57 | 22 | 19 |

As shown in Table 5, even when the type of acrylic rubber was changed, the cured products according to the present embodiments in Examples 9 and 10 showed high tensile strength and elongation, and equivalent compression set, compared with the cured products in Comparative Examples 4 and 5, respectively.

### [Example 11]

The following components were mixed to prepare a rubber composition.
· Acrylic rubber: Nipol AR12 (product name, produced by ZEON CORPORATION): 100 parts by mass.
· Silica: Nipsil ER (product name, produced by Tosoh Silica Corporation, BET specific surface area: 100 m²/g): 50 parts by mass.
· Polyorganosiloxane: STRUKTOL HT750 (product name, produced by Struktol GmbH): 3 parts by mass.
· Antioxidant: DCD (NAUGUARD #445 produced by SI Group, Inc.): 1 part by mass.
· Lubricant: Stearic acid: 1 part by mass.
· Lubricant: Stearyl amine: 0.3 parts by mass.
· Vulcanizing agent: Hexamethylenediamine carbamate: 0.6 parts by mass.
· Vulcanization accelerator: Rhenogran XLA-60 (product name, LANXESS GmbH): 2.0 parts by mass.

Here, Nipol AR12 contains 50 parts by mass of ethyl acrylate, 50 parts by mass of butyl acrylate, and 1.1 parts by mass of a carboxyl group-containing monomer, as a polymer composition.

Except that the above rubber composition was used, a rubber composition was prepared in the same manner as in Example 1, to obtain a cured product and evaluated. The results are shown in Table 6.

### [Comparative Example 6]

Except that the silica and the polyorganosiloxane were not blended, and 60 parts by mass of carbon black (FEF) (product name: Seast SO, produced by TOKAI CARBON CO., LTD.) was blended instead, a rubber composition was prepared in the same manner as in Example 11, to obtain a cured product and evaluated. The results are shown in Table 6.

### [Example 12]

The following components were mixed to prepare a rubber composition.
· Acrylic rubber: Hytemp AR212XP (product name, produced by ZEON CORPORATION): 100 parts by mass.
· Silica: Nipsil ER (product name, produced by Tosoh Silica Corporation, BET specific surface area: 100 m²/g): 50 parts by mass.
· Polyorganosiloxane: STRUKTOL HT750 (product name, produced by Struktol GmbH): 2 parts by mass.
· Antioxidant: DCD (NAUGUARD #445 produced by SI Group, Inc.): 1 part by mass.
· Lubricant: Stearic acid: 1 part by mass.
· Lubricant: Stearyl amine: 0.3 parts by mass.
· Vulcanizing agent: Hexamethylenediamine carbamate: 0.6 parts by mass.
· Vulcanization accelerator: Rhenogran XLA-60 (product name, produced by LANXESS GmbH): 2.0 parts by mass.

Here, Hytemp AR212XP contains 65 parts by mass of ethyl acrylate, 34 parts by mass of butyl acrylate, and 0.5 parts by mass of a carboxyl group-containing monomer, as a polymer composition.

Except that the above rubber composition was used, a rubber composition was prepared in the same manner as in Example 1, to obtain a cured product and evaluated. The results are shown in Table 6.

### [Comparative Example 7]

Except that the silica and the polyorganosiloxane were not blended, and 60 parts by mass of carbon black (FEF) (product name: Seast SO, produced by TOKAI CARBON CO., LTD.) was blended instead, a rubber composition was prepared in the same manner as in Example 12, to obtain a cured product and evaluated. The results are shown in Table 6.

### [Example 13]

The following components were mixed to prepare a rubber composition.
· Acrylic rubber: Racrester CT (product name, produced by OSAKA SODA CO., LTD.): 100 parts by mass.
· Silica: Nipsil ER (product name, produced by Tosoh Silica Corporation, BET specific surface area: 100 m²/g): 50 parts by mass.
· Polyorganosiloxane: STRUKTOL HT750 (product name, produced by Struktol GmbH): 2 parts by mass.
· Antioxidant: DCD (NAUGUARD #445 produced by SI Group, Inc.): 1 part by mass.
· Lubricant: Stearic acid: 1 part by mass.
· Lubricant: Stearyl amine: 0.3 parts by mass.
· Vulcanizing agent: Hexamethylenediamine carbamate: 0.6 parts by mass.
· Vulcanization accelerator: Rhenogran XLA-60 (product name, produced by LANXESS GmbH): 2.0 parts by mass.

Here, Racrester CT contains 74 parts by mass of ethyl acrylate, 18 parts by mass of butyl acrylate, 8 parts by mass of butyl methacrylate, and 1.1 parts by mass of a carboxyl group-containing monomer, as a polymer composition.

Except that the above rubber composition was used, a rubber composition was prepared in the same manner as in Example 1, to obtain a cured product and evaluated. The results are shown in Table 6.

### [Comparative Example 8]

Except that the silica and the polyorganosiloxane were not blended, and 60 parts by mass of carbon black (FEF) (product name: Seast SO, produced by TOKAI CARBON CO., LTD.) was blended instead, a rubber composition was prepared in the same manner as in Example 13, to obtain a cured product and evaluated. The results are shown in Table 6.

**[Table 6]**

| | | Example 11 | Comparative Example 6 | Example 12 | Comparative Example 7 | Example 13 | Comparative Example 8 |
|---|---|---|---|---|---|---|---|
| Acrylic rubber | Nipol AR12 | 100 | 100 | - | - | - | - |
| | Hytemp AR212XP | - | - | 100 | 100 | - | - |
| | Racrester CT | - | - | - | - | 100 | 100 |
| Silica | Nipsil ER (BET:100 m²/g) | 50 | - | 50 | - | 50 | - |
| Carbon black | FEF | - | 60 | - | 60 | - | 60 |
| Polyorganosiloxane | STRUKTOL HT750 | 3 | - | 2 | - | 2 | - |
| Silica/Acrylic rubber | | 0.5 | 0 | 0.5 | 0 | 0.5 | 0 |
| Polyorganosiloxane/Acrylic rubber | | 0.03 | 0 | 0.02 | 0 | 0.02 | 0 |
| Polyorganosiloxane/Silica | | 0.06 | - | 0.04 | - | 0.04 | - |
| Tensile strength [MPa] | | 11.6 | 10.8 | 12.4 | 10.5 | 13.3 | 11.5 |
| Elongation [%] | | 216 | 159 | 360 | 203 | 345 | 218 |
| Compression set [%] | | 19 | 21 | 24 | 26 | - | 25 |

As shown in Table 6, even when a type of the acrylic rubber was changed, the cured products according to the present embodiments in Examples 11 to 13 showed high tensile strength and elongation, and equivalent compression set, compared with the cured products in Comparative Examples 6 to 8, respectively.

## Claims

1. A rubber composition comprising:
an acrylic rubber which is a copolymer of monomers containing an alkyl (meth)acrylate;
silica; and
a polyorganosiloxane having two or more amino groups per molecule.

2. The rubber composition according to claim 1, wherein the acrylic rubber is a carboxyl group-containing acrylic rubber, which is a copolymer of monomers containing an alkyl (meth)acrylate and a carboxyl group-containing monomer.

3. The rubber composition according to claim 1 or 2, wherein the acrylic rubber is a carboxyl group-containing acrylic rubber, which is a copolymer of monomers containing an alkyl (meth)acrylate, a carboxyl group-containing monomer, and an olefin.

4. The rubber composition according to claim 1, wherein the acrylic rubber is an epoxy group-containing acrylic rubber, which is a copolymer of monomers containing an alkyl (meth)acrylate and an epoxy group-containing monomer.

5. The rubber composition according to claim 4, wherein the acrylic rubber is an epoxy group-containing acrylic rubber, which is a copolymer of monomers containing an alkyl (meth)acrylate, an epoxy group-containing monomer, an olefin, and a vinyl carboxylate.

6. The rubber composition according to claim 3 or 5, wherein the olefin is at least one selected from the group consisting of ethylene, butadiene, and isoprene.

7. The rubber composition according to any one of claims 1 to 6, wherein a BET specific surface area of the silica is 100 to 130 m²/g.

8. The rubber composition according to any one of claims 1 to 7, wherein an alkyl moiety of the alkyl (meth)acrylate has 1 to 4 carbon atoms.

9. The rubber composition according to any one of claims 1 to 8, wherein the polyorganosiloxane has structural unit (I) as follows:
[R¹ₓRₐSiO_{(4-(x+a))/2}] (I)
wherein x is 1, 2, or 3; a is 0, 1, or 2; x+a<4; R is each independently methyl, ethyl, propyl, phenyl, or hydroxy; and R¹ is each independently a monovalent organic residue having an NH₂ group.

10. The rubber composition according to any one of claims 1 to 9, wherein a mass proportion of the silica to the acrylic rubber (silica/acrylic rubber) is 0.2 to 1.0.

11. The rubber composition according to any one of claims 1 to 10, wherein a mass proportion of the polyorganosiloxane to the acrylic rubber (polyorganosiloxane/acrylic rubber) is 0.005 to 0.08.

12. The rubber composition according to any one of claims 1 to 11, wherein a mass proportion of the polyorganosiloxane to the silica (polyorganosiloxane/silica) is 0.01 to 0.3.

13. A cured product obtained by curing the rubber composition according to any one of claims 1 to 12.

14. A hose, seal, or gasket comprising the cured product according to claim 13.
